**Europäisches Patentamt**

**European Patent Office**

**Office européen des brevets**

(19)

(11) Publication number : **0 320 167 B1**

(12)

# EUROPEAN PATENT SPECIFICATION

(45) Date of publication of patent specification :
03.06.92 Bulletin 92/23

(51) Int. Cl.⁵ : **F16D 66/02**

(21) Application number : **88311333.4**

(22) Date of filing : **30.11.88**

(54) Brake friction element assembly.

(30) Priority : **10.12.87 GB 8728913**

(43) Date of publication of application :
**14.06.89 Bulletin 89/24**

(45) Publication of the grant of the patent :
**03.06.92 Bulletin 92/23**

(84) Designated Contracting States :
**DE GB IT**

(56) References cited :
**EP-A- 0 006 388
DE-A- 2 827 036
DE-A- 3 230 266
FR-A- 2 203 466
GB-A- 2 086 501**

(56) References cited :
**RESEARCH DISCLOSURE, no. 203, March
1981, disclosure no. 20327, page 124, Havant,
Hampshire, GB; "Vehicle brake lining wearse-
nsor"**

(73) Proprietor : **LUCAS INDUSTRIES public limited
company
Great King Street
Birmingham, B19 2XF West Midlands (GB)**

(72) Inventor : **Pace, Charles Henry
6, The Firs Malpas
Newport Gwent, NP9 6YD Wales (GB)**

(74) Representative : **Waite, Anthony William et al
MARKS & CLERK Alpha Tower Suffolk Street
Queensway
Birmingham B1 1TT (GB)**

EP 0 320 167 B1

# Description

This invention relates to a brake friction element assembly of the general kind having a friction element which includes a lining of friction material carried by a backplate, the assembly incorporating a lining wear indicator device enabling an indication to be provided to a driver that a predetermined degree of lining wear has taken place.

In some conventional assemblies of this general kind, the wear indicator is in the form of a probe which extends into the lining material to a certain depth representing the minimum permissible lining thickness. The probe is arranged to complete an electrical circuit, in use, by contacting the rotary braking surface of a disc or drum of the brake when the maximum permissible lining wear has occurred to provide an indication of the need for replacement of the assembly. Conventionally, the probe is often secured in place by a suitable adhesive and whilst the assembly thus produced is satisfactory and reliable in use, the method is not ideal for use on a production assembly line since the requirement for adhesive application and drying or curing of the adhesive can introduce delays which are a hindrance to rapid continuous assembly techniques.

In other conventional brake friction element assemblies, the probe is retained in position by an additional mechanical device. In US-A-391350 for example, a probe holding member is held on the pad backplate by moulding the pad friction material over a flange of the member lying against the backplate. The probe is subsequently fixed to the member by engagement with pawls carried by the latter. In GB-A-2086501, the probe is held in position by a threaded support member secured by a nut. Both of these prior arrangements are excessively complicated and inconvenient to manufacture.

An object of the present invention is to provide a brake friction element assembly which is better adapted to modern assembly line techniques than the aforesaid conventional arrangement.

According to the present invention, a brake friction element assembly comprises a friction element having a backplate carrying a lining of friction material, and a lining wear indicator device having an electrical conductor extending to a location within the lining material for contact, in use, with a rotary braking surface when the maximum permissible lining wear has occurred, and retention means co-acting with the conductor and the friction element to retain the conductor within the assembly, the assembly being characterised by a protective sheath surrounding the conductor and engaging the friction element under longitudinal stress in order to urge the conductor into engagement with the retention means.

In one convenient arrangement, the friction element has a non-circular opening therein extending through the backplate, the opening and retention means being such that passage of said retention means through the opening is permitted when the opening and said means have a first relative orientation, and that return movement of said means is prevented by an adjacent surface of the assembly after relative movement between said opening and said means to produce a second relative orientation thereof.

Said opening may alternatively be formed in an initially separate component retained in a position in which it bridges across an opening in the backplate, said component supporting the indicator device within the lining at a depth equal to the minimum permissible lining thickness.

In a further alternative arrangement, said friction lining has an opening therein extending inwardly from the friction surface of the lining, the retention means being disposed within said opening and engaging a surface therein to support the conductor at a depth within the lining equal to the minimum permissible lining thickness, the conductor extending through the friction element to the side thereof remote from the lining and the retention means being held against said surface by said sheath engaging a surface at the backplate side of the friction element.

Typically, said opening communicates with a smaller diameter opening, the junction between said openings forming a shoulder providing the surface and the retention means being such that it can only enter the opening from the lining end thereof.

The invention will now be described, by way of example, with reference to the accompanying drawings in which:-

Figure 1 is a cross section through part of a brake friction element assembly of the invention in the form of a disc brake pad;

Figure 2 is a cross section along the line B-B of Figure 1;

Figure 3 is a scrap plan view to an enlarged scale of part of the assembly of Figures 1 and 2 with the friction material omitted;

Figure 4 is a cross section along the line A-A of Figure 3;

Figure 5 is an underneath plan view of part of an alternative embodiment of the assembly of the invention;

Figure 6 is a cross section along the line C-C of Figure 5;

Figure 7 is a view similar to Figure 2 of a further alternative embodiment of the assembly of the invention;

Figures 8 to 10 respectively illustrate another alternative embodiment of the assembly of the invention in different stages of assembly, and

Figure 11 is a perspective view to an enlarged scale of a component part of the assembly of Figures 8 to 10.

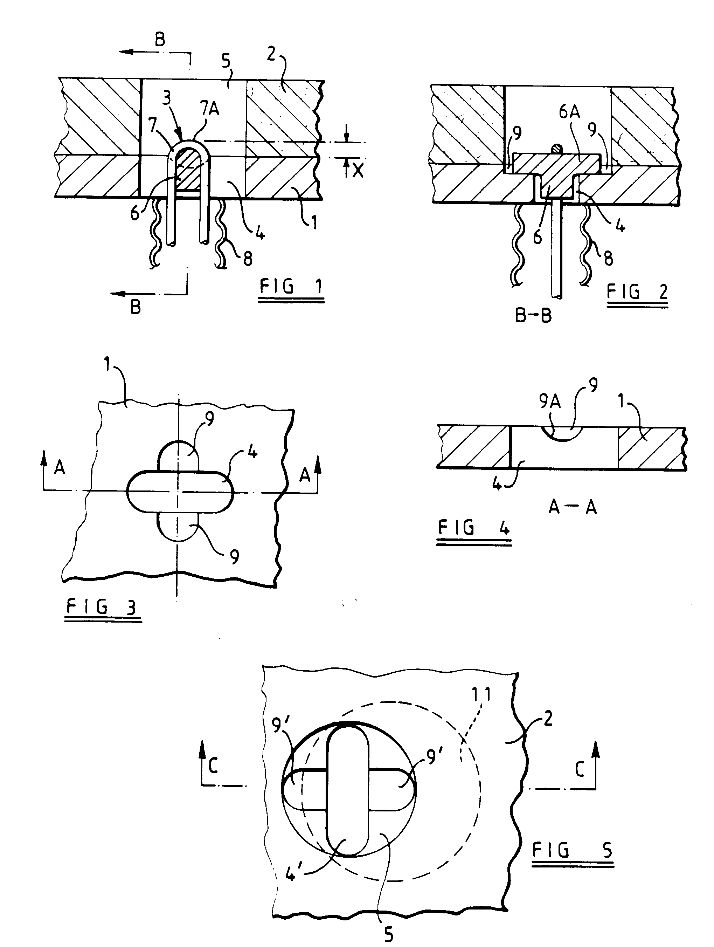

The brake friction element assembly, of which a part is illustrated in Figures 1 to 4, is in the form of a disc brake pad having a planar back plate 1 upon which is mounted a lining 2 of friction material. A wear indicator in the form of a probe, indicated generally at 3, extends through an opening 4 in the back plate and by a distance X into an opening 5 in the friction material 2. The distance X represents the minimum permitted lining thickness in the worn condition of the pad. The probe 3 comprises a body or head 6 around which is looped a wire 7, of which an outermost portion 7A faces a rotatable surface (not shown) against which the friction lining 2 is applied during a braking operation. The portion of the wire 7 outside the friction element is protected by a surrounding sheath 8.

As will be seen more clearly from Figures 2 to 4, the opening 4 has the shape of an elongate slot, and the head 6 is generally T-shaped with the cross-bar 6A of the T dimensioned to pass with a small clearance through the slot when the major axes of the slot and cross-bar extend in the same direction. The cross-bar 6A cannot pass through the slot 4 when said major axes are not directed in the aforesaid manner. A pair of recesses 9 are formed in the upper surface of the backplate 1 adjacent and extending at right angles to the slot 4.

In order to assemble the wear indicator probe 3 into the friction element, the cross-bar 6A of the head is aligned with and passed through the slot 4 in the backplate, the head then being turned through 90° to enable the cross-bar to be positioned within the recesses 9 and be thereby prevented from return movement through the slot. In order to retain the wear indicator in its operative position as shown, use is made of the protective sheath 8 which has a length slightly greater than that required for its protective function so that when the sheath is trapped between opposed surfaces, it is compressed and creates a resilient force in its longitudinal direction. In the case illustrated, the remote end of the sheath, (not shown) would be engaged, for example, with a connector socket and the end of the sheath adjacent the wear indicator is engaged against the adjacent surface of the backplate 1. The resilient force thus produced longitudinally of the sheath is transmitted by the wire 7 to the opposite side of the backplate and is sufficient to retain the head 6 within the recesses 9.

As will be readily understood by those familiar with the art, when the friction lining 2 has worn sufficiently to bring the wire 7 into contact with the rotary surface of the brake disc, an electrical circuit is completed to permit an indication to be given to a driver that pad replacement is necessary.

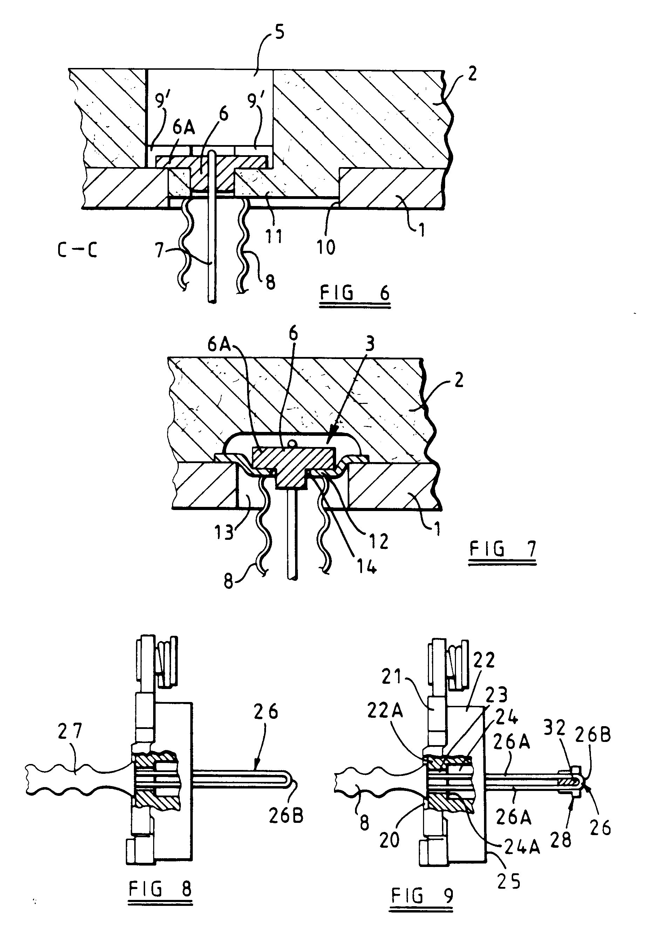

In the alternative embodiment illustrated in Figures 5 and 6, the probe is identical to that in the previous embodiment, but the elongate slot 4' and recesses 9' are formed entirely within the friction lining 2, rather than in the backplate, as previously. In this embodiment, use is made of an opening 10 formed in the backplate to receive a spigot 11 of the friction lining 2 which serves to key the lining when moulded to the backplate. The slot 4' and recesses 9' are formed within the spigot 11 opposite to a hole 5 in the lining material, as previously. Insertion of the probe and the positioning thereof within the recesses 9' is as described in connection with the previous embodiment, as is the retention therein by the use of resilient force derived from the sheath 8 which, in this embodiment, abuts the adjacent exposed surface of the friction lining 2.

Figure 7 illustrates an alternative embodiment in which the slots and recesses are formed in a separate component, shown in the form of a dished washer 12 which is retained against the outer surface of the backplate 1 by part of the friction lining 2 which is moulded over the outer periphery of the washer, trapping it securely in position in alignment with an opening 13 through the backplate. In this embodiment, a slot 14, similar to the slot 4 in the previous embodiments, is formed in the washer 12, which also has shallow depressions formed at right angles to the slot 14 which perform the function of the recesses 9 in the previous embodiments. The probe 3 is again T-shaped, having a cross-bar 6A of similar shape to but slightly smaller dimensions than the slot 14, enabling the head 6 to be assembled in relation to the washer 12 in a similar manner to that described for the previous embodiments in relation to the backplate and lining respectively. The sheath 8 is again used to generate the necessary retention force, this time abutting the underside of the washer 12.

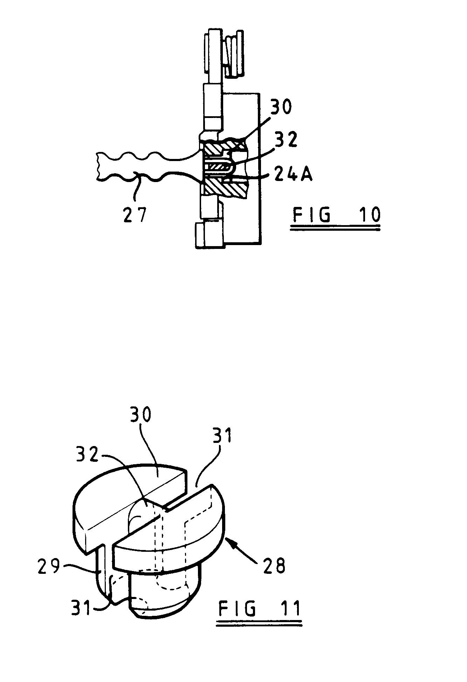

In the alternative embodiment of Figures 8 to 11, a circular hole 20 is formed through the back plate 21 and receives a portion 22A of the friction lining 22 therein in conventional manner. The lining is itself provided with a through hole 23 leading into a larger diameter opening 24 extending to the outer surface 25 of the lining. A pad wear indicator probe is formed by a looped conductor 26 protected by a surrounding sheath 27, the loop being supported in a desired position within the lining by a separately made retainer 28 illustrated in more detail in Figure 11.

The retainer 28 can be seen to be in the form of a generally cylindrical plug having a stem 29 and a larger diameter flange or head 30 at one end thereof. The stem has a pair of diametrically opposed longitudinal slots 31 extending over its entire length, including the head 30.

The indicator device is assembled on the pad by first pulling back the sheath 27 to expose a length of the probe 26 and the latter is then passed through the holes 23, 24 in the lining (Figure 8). The plug 28 is then inserted into the loop, with the two sides 26A of the loop engaged in the grooves 31 and the end 26B of the loop engaged over a bridge portion 32 of the plug, as can be seen in Figure 9. The loop is then retracted, together with the plug (Figure 10), until the latter comes to rest with the head 30 against an internal shoulder 24A formed at the junction between the holes 23 and 24 in the lining. The sheath 27 is then released and, by virtue of its inherent resilience, springs back to the position shown in Figure 10 in which it engages the underside of the lining and acts to hold the plug in place.

The invention will be seen to provide a brake friction element assembly including a wear indicator which can rapidly be attached thereto without the use of adhesive and retained in position without the necessity for additional components. It will be understood that the invention may be applied to any form of brake friction element assembly of the general kind referred to, including a shoe assembly for use in a drum brake. Although all of the described embodiments employ the protective sheath 8 in a compressive mode in order to generate the required retention force, it may alternatively be used under tension for the same purpose.

## Claims

1. A brake friction element assembly comprising a friction element having a backplate (1) carrying a lining (2) of friction material, and a lining wear indicator device having an electrical conductor (7) extending to a location within the lining material for contact, in use, with a rotary braking surface when the maximum permissible lining wear has occurred, and retention means (6) co-acting with the conductor (7) and the friction element to retain the conductor within the assembly, characterised by a protective sheath (8) surrounding the conductor and engaging the friction element under longitudinal stress in order to urge the conductor into engagement with the retention means (6).

2. An assembly according to Claim 1, characterised in that the friction element (1, 2) has a non-circular opening (4) therein extending through the backplate (1), the opening (4) and retention means (6) being such that passage of said retention means (6) through the opening (4) is permitted when the opening and said means have a first relative orientation, and that return movement of said means (6) is prevented by an adjacent surface (9A) of the assembly after relative movement between said opening and said means to produce a second relative orientation thereof.

3. An assembly according to Claim 2 characterised in that said movement is an angular movement.

4. An assembly according to Claim 2 or Claim 3, characterised in that a recess (9) is provided adjacent the opening (4) and has an orientation angularly displaced from that of said opening, said adjacent surface (9A) being in the recess (9).

5. An assembly according to any one of Claims 2 to 4, characterised in that said opening (4) and recess (9) are formed in the backplate (1) and the lining (2) has an aperture (5) which receives the indicator device to a depth equal to the minimum permissible lining thickness, said sheath (8) engaging the backplate (1).

6. An assembly according to any one of Claims 2 to 4, characterised in that said opening (4) and recess (9) are formed in the lining (2) such as to support the indicator device at a depth equal to the minimum permissible lining thickness, said sheath (8) engaging the lining (2).

7. An assembly according to any one of Claims 2 to 4, characterised in that said opening and recess are formed in a separately made component (12) retained in a position in which it bridges across an opening (13) in the backplate (1), said component (12) supporting the indicator device within the lining at a depth equal to the minimum permissible lining thickness.

8. An assembly according to Claim 7 characterised in that the component (12) is retained between the lining (2) and backplate (1) in said position.

9. An assembly according to Claim 1, characterised in that said friction lining (25) has an opening (24) therein extending inwardly from the friction surface (25) of the lining (22), the retention means (28) being disposed within said opening (24) and engaging a surface (24A) therein to support the conductor (26) at a depth within the lining (25) equal to the minimum permissible lining thickness, the conductor extending through the friction element to the side thereof remote from the lining (22) and the retention means (28) being held against said surface (24A) by said sheath (8) engaging a surface at the backplate side of the friction element.

10. An assembly according to Claim 9 characterised in that said opening (24) communicates with a smaller diameter opening (23), the junction between said openings forming a shoulder providing the surface (24A) and the retention means (28) being such that it can only enter the opening (24) from the lining end thereof.

11. An assembly according to Claim 10 characterised in that the retention means (28) is initially separate from the conductor and is placed in engagement with the latter when this has been passed through the openings (23, 24) from the backplate side of the friction element.

12. An assembly according to Claim 10 or Claim 11 characterised in that the retention means (28) has a generally cylindrical portion (29) dimensioned to pass into the smaller diameter opening (23) and a radial flange (30) dimensioned to enter the opening (24) but not the opening (23), the retention means being provided with longitudinal grooves (31) to receive the respective arms (26A) of the conductor (26) and providing a bridge (32) on which a closed loop portion (26B) of the conductor is supported in use.

**Patentansprüche**

1. Reibelementeinheit für Bremszwecke mit einem Reibelement mit einer Stützplatte (1), die einen Belag (2) aus einem Reibmaterial trägt, und einer Belagabrieb-Anzeigevorrichtung mit einem elektrischen Leiter (7), der sich bis zu einer Stelle innerhalb des Belagmateriales erstreckt, um im Betrieb bei maximal zulässigem Belagabrieb mit einer drehbaren Bremsfläche in Kontakt zu treten, und einer mit dem Leiter (7) und dem Reibelement zusammenwirkenden Halteeinrichtung (6), die den Leiter innerhalb der Einheit hält, **gekennzeichnet durch** eine Schutzhülle (8), die den Leiter umgibt und unter Längsbelastung mit dem Reibelement in Eingriff tritt, um den Leiter in Eingriff mit der Halteeinrichtung (6) zu drücken.

2. Einheit nach Anspruch 1, **dadurch gekennzeichnet**, daß das Reibelement (1, 2) eine nichtkreisförmige Öffnung (4) aufweist, die sich durch die Stützplatte (1) erstreckt, daß die Öffnung (4) und die Halteeinrichtung (6) derart ausgebildet sind, daß ein Durchgang der Halteeinrichtung (6) durch die Öffnung (4) möglich ist, wenn die Öffnung und die Einrichtung eine erste Relativorientierung besitzen, und daß die Rückkehrbewegung der Einrichtung (6) durch eine benachbarte Fläche (9A) der Einheit nach einer Relativbewegung zwischen der Öffnung und der Einheit, die eine zweite Relativorientierung derselben hervorruft, verhindert wird.

3. Einheit nach Anspruch 2, **dadurch gekennzeichnet**, daß die Bewegung eine Winkelbewegung ist.

4. Einheit nach Anspruch 2 oder 3, dadurch gekennzeichnet, daß eine Ausnehmung (9) benachbart zur Öffnung (4) vorgesehen ist und eine Orientierung besitzt, die gegenüber der der Öffnung winklig versetzt ist, wobei sich die benachbarte Fläche (9A) in der Ausnehmung (9) befindet.

5. Einheit nach einem der Ansprüche 2 bis 4, **dadurch gekennzeichnet**, daß die Öffnung (4) und die Ausnehmung (9) in der Stützplatte (1) ausgebildet sind und daß der Belag (2) eine Öffnung (5) aufweist, die die Anzeigevorrichtung bis zu einer Tiefe aufnimmt, die der minimal zulässigen Belagdicke entspricht, wobei die Schutzhülle (8) mit der Stützplatte (1) in Eingriff steht.

6. Einheit nach einem der Ansprüche 2 bis 4, **dadurch gekennzeichnet**, daß die Öffnung (4) und die Ausnehmung (9) derart im Belag (2) ausgebildet sind, daß sie die Anzeigevorrichtung bei einer Tiefe, die der minimal zulässigen Belagdicke entspricht, lagern, wobei die Schutzhülle (8) mit dem Belag (2) in Eingriff steht.

7. Einheit nach einem der Ansprüche 2 bis 4, **dadurch gekennzeichnet**, daß die Öffnung und Ausnehmung in einem getrennt hergestellten Bestandteil (12) ausgebildet sind, der in einer Position gehalten wird, in der er eine Öffnung (13) in der Stützplatte (1) überbrückt, wobei der Bestandteil (12) die Anzeigevorrichtung innerhalb des Belages bei einer Tiefe lagert, die der minimal zulässigen Belagdicke entspricht.

8. Einheit nach Anspruch 7, **dadurch gekennzeichnet**, daß der Bestandteil (12) zwischen dem Belag (2) und der Stützplatte (1) in dieser Position gehalten wird.

9. Einheit nach Anspruch 1, **dadurch gekennzeichnet**, daß der Reibbelag (25) eine Öffnung (24) besitzt, die sich von der Reibfläche (25) des Belages (22) aus nach innen erstreckt, daß die Halteeinrichtung (28) innerhalb der Öffnung (24) angeordnet ist und mit einer darin befindlichen Fläche (24A) in Eingriff steht, um den Leiter (26) bei einer Tiefe innerhalb des Belages (25) zu lagern, die der minimal zulässigen Belagdicke entspricht, daß sich der Leiter durch das Reibelement zu der Seite desselben, die vom Belag (22) entfernt ist, erstreckt und daß die Halteeinrichtung (28) von der Schutzhülle (8), die mit einer Fläche an der Stützplattenseite des Reibelementes in Eingriff steht, gegen die Fläche (24A) gehalten wird.

10. Einheit nach Anspruch 9, **dadurch gekennzeichnet**, daß die Öffnung (24) mit einer Öffnung (23) mit kleinerem Durchmesser in Verbindung steht, wobei die Verbindung zwischen den Öffnungen eine Schulter bildet, die die Fläche (24A) vorsieht, und daß die Halteeinrichtung (28) derart ausgebildet ist, daß sie in die Öffnung (24) nur vom Belagende derselben her eindringen kann.

11. Einheit nach Anspruch 10, **dadurch gekennzeichnet**, daß die Halteeinrichtung (28) anfangs vom Leiter getrennt ist und mit diesem in Eingriff gebracht wird, wenn dieser die Öffnungen (23, 24) von der Stützplattenseite des Reibelementes her passiert hat.

12. Einheit nach Anspruch 10 oder 11, **dadurch gekennzeichnet**, daß die Halteeinrichtung (28) einen allgemein zylindrischen Abschnitt (29), der so bemessen ist, daß er in die Öffnung (23) mit kleinerem Durchmesser hineinreicht, und einen radialen Flansch (30) aufweist, der so bemessen ist, daß er in die Öffnung (24) eindringt, jedoch nicht in die Öffnung (23), und daß die Halteeinrichtung mit Längsnuten (31) zur Aufnahme der entsprechenden Arme (26A) des Leiters (26) versehen ist und eine Brücke (32) bildet, auf der ein geschlossener Schleifenabschnitt (26B) des Leiters im Betrieb gelagert ist.

**Revendications**

1. Assemblage d'élément à friction pour frein comprenant un élément à friction possédant une pla-

que dorsale (1) supportant une garniture intérieure (2) en une matière à friction, et un dispositif indicateur d'usure de la garniture intérieure possédant un conducteur électrique (7) qui s'étend jusqu'à un endroit situé au sein de la matière de la garniture intérieure pour venir se mettre en contact, lors de la mise en service, avec une surface rotative de freinage lorsqu'est apparue l'usure maximale admissible quant à la garniture intérieure, et un moyen de rétention (6) agissant conjointement avec le conducteur (7) et l'élément à friction pour retenir le conducteur au sein de l'assemblage, caractérisé par une gaine de protection (8) entourant le conducteur et venant se mettre en contact avec l'élément à friction lorsque s'exerce une contrainte longitudinale afin de presser le conducteur en contact avec le moyen de rétention (6).

2. Assemblage selon la revendication 1, caractérisé en ce que, dans l'élément à friction (1, 2), est pratiquée une ouverture non circulaire (4) s'étendant à travers la plaque dorsale (1), l'ouverture (4) et le moyen de rétention (6) étant tels que le passage dudit moyen de rétention (6) à travers l'ouverture (4) est permis lorsque l'ouverture et ledit moyen possédent une première orientation relative et en ce que le mouvement en retour dudit moyen (6) est empêché par une surface adjacente (9A) de l'assemblage suite au mouvement relatif entre ladite ouverture et ledit moyen pour procurer une seconde orientation relative quant à ces derniers.

3. Assemblage selon la revendication 2, caractérisé en ce que ledit mouvement est un mouvement angulaire.

4. Assemblage selon la revendication 2 ou 3, caractérisé en ce qu'on pratique un évidement (9) en position adjacente à l'ouverture (4), dont l'orientation est angulairement décalée par rapport à celle de ladite ouverture, ladite surface adjacente (9A) se trouvant dans l'évidement (9).

5. Assemblage selon l'une quelconque des revendications 2 à 4, caractérisé en ce qu'on pratique ladite ouverture (4) et l'évidement (9) dans la plaque dorsale (1), la garniture intérieure (2) étant munie d'une ouverture (5) dans laquelle vient se loger le dispositif indicateur à une profondeur égale à l'épaisseur minimale admissible quant à la garniture intérieure, ladite gaine (8) venant se mettre en contact avec la plaque dorsale (1).

6. Assemblage selon l'une quelconque des revendications 2 à 4, caractérisé en ce qu'on pratique ladite ouverture (4) et l'évidement (9) dans la garniture intérieure (2) de façon à supporter le dispositif indicateur à une profondeur égale à l'épaisseur minimale admissible quant à la garniture intérieure, ladite gaine (8) venant se mettre en contact avec la garniture intérieure (2).

7. Assemblage selon l'une quelconque des revendications 2 à 4, caractérisé en ce qu'on pratique ladite ouverture et l'évidement dans un composant (12) fabriqué séparément retenu dans une position dans laquelle il surplombe une ouverture (13) pratiquée dans la plaque dorsale (1), ledit composant (12) supportant le dispositif indicateur au sein de la garniture intérieure à une profondeur égale à l'épaisseur minimale admissible quant à la garniture intérieure.

8. Assemblage selon la revendication 7, caractérisé en ce que le composant (12) est retenu entre la garniture intérieure (2) et la plaque dorsale (1), dans ladite position.

9. Assemblage selon la revendication 1, caractérisé en ce que, dans ladite garniture intérieure à friction (25), on pratique une ouverture (24) s'étendant vers l'intérieur depuis la surface à friction (25) de la garniture intérieure (22), le moyen de rétention (28) étant disposé au sein de ladite ouverture (24) et venant se mettre en contact avec une surface (24A) en son sein pour supporter le conducteur (26) à une profondeur au sein de la garniture intérieure (25) égale à l'épaisseur minimale admissible quant à la garniture intérieure, le conducteur s'étendant à travers l'élément à friction en direction du côté de ce dernier éloigné de la garniture intérieure (22) et le moyen de rétention (28) étant maintenu contre ladite surface (24A) à l'intervention de ladite gaine (8) qui vient se mettre en contact avec une surface du côté de l'élément à friction dirigé vers la plaque dorsale.

10. Assemblage selon la revendication 9, caractérisé en ce que ladite ouverture (24) communique avec une ouverture (23) à plus petit diamètre, la jonction entre lesdites ouvertures formant un épaulement qui procure la surface (24A) et le moyen de rétention (28) étant tel qu'il peut pénétrer seulement dans l'ouverture (24) à partir de l'extrémité de cette dernière dirigée vers la garniture intérieure.

11. Assemblage selon la revendication 10, caractérisé en ce que le moyen de rétention (28) est, dans un premier temps, séparé du conducteur et est mis en contact avec ce dernier lorsqu'on a fait passer celui-ci à travers les ouvertures (23, 24) depuis le côté de l'élément à friction dirigé vers la plaque dorsale.

12. Assemblage selon la revendication 10 ou 11, caractérisé en ce que le moyen de rétention (28) possède une portion généralement cylindrique (29) dimensionnée pour passer dans l'ouverture (23) à plus petit diamètre, ainsi qu'un rebord radial (30) dimensionné pour entrer dans l'ouverture (24), mais non dans l'ouverture (23), le moyen de rétention étant muni de rainures longitudinales (31) dans lesquelles viennent se loger les bras respectifs (26A) du conducteur (26) et procurant un pont (32) qui sert de support à une portion à boucle fermée (26B) du conducteur, lors de la mise en service.

FIG 1

FIG 2

B-B

FIG 3

FIG 4

A - A

FIG 5

FIG 6

FIG 7

FIG 8

FIG 9

FIG 10

FIG 11